# EUROPEAN PATENT APPLICATION

(11) **EP 1 075 117 A2**
(43) Date of publication of application: **07.02.2001**
(21) Application number: 00306615.6
(22) Date of filing: 03.08.2000
(51) Int. Cl.: H04L 12/56, H04N 7/24

(54) **Communication apparatus, communication methods, and media**

(30) Priority: 05.08.1999 JP 22191799
(71) Applicant: SONY CORPORATION, Tokyo 141 (JP)
(72) Inventor: Fujisawa, Kenji, c/o Intellectual Property Dept., Shinagawa-ku, Tokyo 141 (JP)
(74) Representative: Pilch, Adam John Michael

(57) **Abstract**

In a communication technique allowing units connected to sub-nets (32-2,33) to communicate with each other, a CPU (51) generates the offset corresponding to an MAC address. A memory (52) stores the generated offset correspondingly to the MAC address. An IEEE-1394 interface (55) generates an IEEE-1394 packet which includes the generated offset.

## Description

The present invention relates to communication apparatus and methods, and media, and more particularly, to a communication apparatus, a communication method, and a medium which may be capable of allowing units connected to sub-nets employing different communication methods to easily communicate with each other.

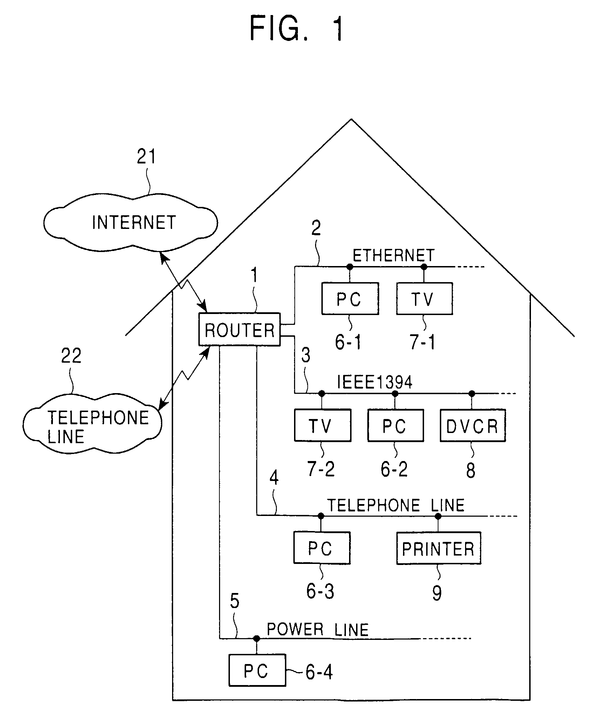

Fig. 1 of the accompanying drawings is a view showing a conventional home network. A router 1 is connected to sub-nets: an Ethernet (trademark) sub-network 2, an IEEE (Institute of Electrical and Electronic Engineers) 1394 sub-network 3, a sub-network 4 using a telephone line (twisted-pair cables) as a transfer medium, a sub-network 5 using a power line as a transfer medium, the Internet 21, and a telephone line 22 which can be a digital subscriber line (DSL), such as a high-data-rate DSL (HDSL), a symmetric DSL (SDSL), an asymmetric DSL (ADSL), or a very-high-data-rate DSL (VDSL).

A personal computer 6-1 and a TV unit 7-1 are connected to the sub-network 4 using a telephone line as a transfer medium. A personal computer 6-4 is connected to the sub-network 5 using a power line as a transfer medium.

The personal computers 6-1 to 6-4, the TV units 7-1 and 7-2, the digital video cassette recorder 8, and the printer 9 can send predetermined data to and receive it from each other.

The router 1 receives a packet from the personal computer 6-1 or the TV unit 7-1 through the Ethernet sub-network 2, converts it to a predetermined-method packet, and sends the packet to the TV unit 7-2, the personal computer 6-2, or the digital video cassette recorder 8 through the IEEE-1394 sub-network 3, sends the packet to the personal computer 6-3 or the printer 9 through the sub-network 4 using a telephone line as a transfer medium, or sends the packet to the personal computer 6-4 through the sub network 5 using a power line as a transfer medium.

The router 1 receives a packet from the TV unit 7-2, the personal computer 6-2, or the digital video cassette recorder 8 through the IEEE-1394 sub-network 3, converts it to a predetermined-method packet, and sends the packet to the personal computer 6-1 or the TV unit 7-1 through the Ethernet sub-network 2, sends the packet to the personal computer 6-3 or the printer 9 through the sub-network 4 using a telephone line as a transfer medium, or sends the packet to the personal computer 6-4 through the sub network 5 using a power line as a transfer medium.

The router 1 receives a packet from the personal computer 6-3 or the printer 9 through the sub-network 4 using a telephone line as a transfer medium, converts it to a predetermined-method packet, and sends the packet to the personal computer 6-1 or the TV unit 7-1 through the Ethernet sub-network 2, sends the packet to the TV unit 7-2, the personal computer 6-2, or the digital video cassette recorder 8 through the IEEE-1394 sub-network 3, or sends the packet to the personal computer 6-4 through the sub network 5 using a power line as a transfer medium.

The router 1 receives a packet from the personal computer 6-4 through the sub network 5 using a power line as a transfer medium, converts it to a predetermined-method packet, and sends the packet to the personal computer 6-1 or the TV unit 7-1 through the Ethernet sub-network 2, sends the packet to the TV unit 7-2, the personal computer 6-2, or the digital video cassette recorder 8 through the IEEE-1394 sub-network 3, or sends the packet to the personal computer 6-3 or the printer 9 through the sub-network 4 using a telephone line as a transfer medium.

In the same way, the router 1 receives a packet through the Internet 21 or the telephone line 22, converts it to a predetermined-method packet, and sends the packet to the personal computer 6-1 or the TV unit 7-1 through the Ethernet sub-network 2, sends the packet to the TV unit 7-2, the personal computer 6-2, or the digital video cassette recorder 8 through the IEEE-1394 sub-network 3, sends the packet to the personal computer 6-3 or the printer 9 through the sub-network 4 using a telephone line as a transfer medium, or sends the packet to the personal computer 6-4 through the sub network 5 using a power line as a transfer medium.

In addition, the router 1 receives a packet from the personal computer 6-1 or the TV unit 7-1 through the Ethernet sub-network 2, receives a packet from the TV unit 7-2, the personal computer 6-2, or the digital video cassette recorder 8 through the IEEE-1394 sub-network 3, receives a packet from the personal computer 6-3 or the printer 9 through the sub-network 4 using a telephone line as a transfer medium, or receives a packet from the personal computer 6-4 through the sub network 5 using a power line as a transfer medium, converts it to a predetermined-method packet, and sends the packet through the Internet 21 or the telephone line 22.

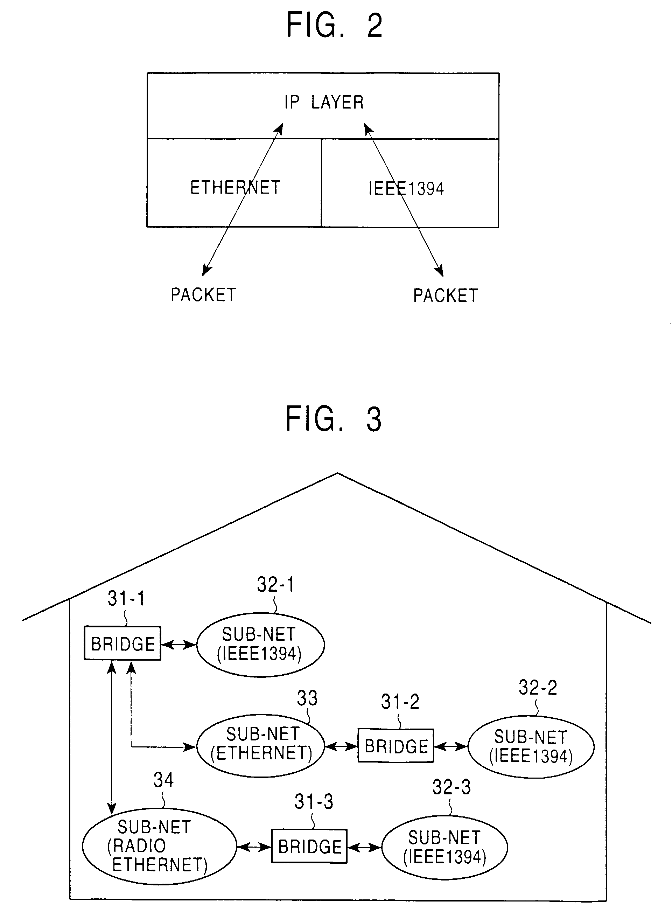

Fig. 2 is a view showing conversion between a packet transmitted through the IEEE-1394 sub-network 3 and a packet transmitted through the Ethernet sub-network 2. Since the link-address method (16-bit node ID (identification) and 48-bit offset address) and the frame format of a packet sent through the IEEE-1394 sub-network 3 are different from the link-address method (48-bit media-access-control (MAC) address) and the frame format of a packet sent through the Ethernet sub-network 2, the router 1 converts the method of a received packet at an IP layer as an Internet protocol (IP) router.

A node is a unit to be accessed by an address on the IEEE-1394 sub-network 3. Usually, each node corresponds to one of units connected to the IEEE-1394 sub-network 3. A node ID is an ID assigned to each node for identifying the node in the configuration executed after a bus reset in the IEEE-1394 sub-network 3 configured according to IEEE 1394.

To convert the method of a received packet by the router 1 as described above, the user needs to assign a network address to each of the Ethernet sub-network 2, the IEEE-1394 sub-network 3, the sub-network 4 using a telephone line as a transfer medium, a sub-network 5 using a power line as a transfer medium, the Internet 21, and the telephone line 22.

When a unit connected to the Ethernet sub-network 2, the IEEE-1394 sub-network 3, the sub-network 4 using a telephone line as a transfer medium, or a sub-network 5 using a power line as a transfer medium detects a service or anther unit connected to the Ethernet sub-network 2, the IEEE-1394 sub-network 3, the sub-network 4 using a telephone line as a transfer medium, or a sub-network 5 using a power line as a transfer medium, the unit connected to the Ethernet sub-network 2, the IEEE-1394 sub-network 3, the sub-network 4 using a telephone line as a transfer medium, or a sub-network 5 using a power line as a transfer medium sends a broadcast packet. Since the router 1 itself cannot transfer the broadcast packet, however, special functions such as a gateway function for each predetermined usage, including service discovery, need to be provided and the user must specify a predetermined setting for each function.

It is an aim of at least an embodiment of the present invention to allow units connected to sub-networks employing different methods to easily communicate with each other without using complicated settings for network addresses, a gateway, or others.

One aspect of the present invention provides a communication apparatus including link-address generation means for generating a second link address in a second link-address method correspondingly to a first link address in a first link-address method; link-address storage means for storing the second link address correspondingly to the first link address; and packet generation means for generating a predetermined-method packet which stores the second link address.

The communication apparatus may be configured such that the first link address is a MAC address, and the second link address is an IEEE-1394 offset.

The communication apparatus may be configured such that the first link address includes a node ID and an offset of IEEE 1394, and the second link address is a MAC address.

The communication apparatus may be configured such that the link-address generation means generates the second link address according to an ARP packet.

Another aspect of the present invention provides a communication method including a link-address generation step of generating a second link address in a second link-address method correspondingly to a first link address in a first link-address method; a link-address storage step of storing the second link address correspondingly to the first link address; and a packet generation step of generating a predetermined-method packet which stores the second link address.

Still another aspect of the present invention provides a medium for making a computer execute a program, or the program itself, the program including a link-address generation step of generating a second link address in a second link-address method correspondingly to a first link address in a first link-address method; a link-address storage step of storing the second link address correspondingly to the first link address; and a packet generation step of generating a predetermined-method packet which stores the second link address.

According to a communication apparatus, a communication method, and a medium embodying the present invention, since a second link address in a second link-address method is generated correspondingly to a first link address in a first link-address method; the second link address is stored correspondingly to the first link address; and a predetermined-method packet which stores the second link address is generated, units connected to sub-nets employing different methods are allowed to easily communicate with each other without any complicated settings.

The invention will now be described by way of example with reference to the accompanying drawings, throughout which like parts are referred to by like references, and in which:

Fig. 1 is a view showing a conventional home network.

Fig. 2 is a view showing conversion executed by a router 1 between a packet transmitted through an IEEE-1394 sub-network 3 and a packet transmitted through an Ethernet sub-network 2.

Fig. 3 is a view showing a network according to the present invention.

Fig. 4 is a block diagram showing the structure of a bridge 31-2.

Fig. 5 is a view showing a layer for packet re-writing processing executed by a CPU 51.

Fig. 6 is a view showing link-address re-writing executed by the bridge 31-2.

Fig. 7 is a view showing the structure of an Ethernet header.

Fig. 8 is a view showing the structure of a 1394 header.

Fig. 9 is a view showing the structure of a 1394 header.

Fig. 10 is a view showing an ARP packet transmitted by a unit connected to an Ethernet sub-network 33.

Fig. 11 is a view showing an ARP packet transmitted by a unit connected to an IEEE-1394 sub-network 32.

Fig. 12 is a view showing processing executed by a bridge 31.

Fig. 13 is a view showing an Ethernet-1394 conversion table.

Fig. 14 is a view showing a 1394-Ethernet conversion table.

Fig. 15 is a flowchart of a procedure in which a personal computer 61-1 sends data to a personal computer 61-2.

Figs. 16A and 16B show an ARP request packet which the bridge 31 receives from the personal computer 61-1 and an ARP request packet converted by the bridge 31 and broadcasted to the IEEE-1394 sub-network 32, respectively.

Figs. 17A and 17B show an ARP response packet which the bridge 31 receives from the personal computer 61-2 and an ARP response packet converted by the bridge 31 and transmitted to the personal computer 61-1 through the Ethernet sub-network 33, respectively.

Figs. 18A and 18B show an IP packet which the bridge 31 receives from the personal computer 61-1 and an IP packet converted by the bridge 31 and transmitted to the personal computer 61-2 through the IEEE-1394 sub-network 32, respectively.

Fig. 19 is a flowchart of a procedure in which the personal computer 61-2 sends data to the personal computer 61-1.

Figs. 20A and 20B show an ARP request packet which the bridge 31 receives from the personal computer 61-2 and an ARP request packet converted by the bridge 31 and broadcasted to the Ethernet sub-network 33, respectively.

Figs. 21A and 21B show an ARP response packet which the bridge 31 receives from the personal computer 61-1 and an ARP response packet converted by the bridge 31 and transmitted to the personal computer 61-2 through the IEEE-1394 sub-network 32, respectively.

Figs. 22A and 22B show an IP packet which the bridge 31 receives from the personal computer 61-2 and an IP packet converted by the bridge 31 and transmitted to the personal computer 61-1, respectively.

Fig. 23 is a flowchart of communication processing executed by the bridge 31.

Figs. 24A, 24B, and 24C show media.

Fig. 25 is a view showing the structure of a personal computer 301.

Fig. 3 of the drawings is a view showing a network according to an embodiment of the present invention. A bridge 31-1 is connected to an IEEE-1394 sub-network 32-1 configured based on IEEE 1394, to an Ethernet sub-network 33 configured based on the Ethernet, and to a radio Ethernet sub-network 34 configured based on the radio Ethernet.

The bridge 31-1 receives a packet from a unit connected to the IEEE-1394 sub-network 32-1, converts it to a predetermined-method packet, and sends the packet to a predetermined unit connected to the Ethernet sub-network 33 or the radio Ethernet sub-network 34. The bridge 31-1 receives a packet from a unit connected to the Ethernet sub-network 33 or the radio Ethernet sub-network 34, converts it to a predetermined-method packet, and sends the packet to a predetermined unit connected to the IEEE-1394 sub-network 32-1.

A bridge 31-2 is connected to the Ethernet sub-network 33 and to an IEEE-1394 sub-network 32-2 configured according to IEEE 1394. The bridge 31-2 receives a packet from a unit connected to the Ethernet sub-network 33, converts it to a predetermined-method packet, and sends the packet to a predetermined unit connected to the IEEE-1394 sub-network 32-2. The bridge 31-2 receives a packet from a unit connected to the IEEE-1394 sub-network 32-2, converts it to a predetermined-method packet, and sends the packet to a predetermined unit connected to the Ethernet sub-network 33.

A bridge 31-3 is connected to the radio Ethernet sub-network 34 and to an IEEE-1394 sub-network 32-3 configured according to IEEE 1394. The bridge 31-3 receives a packet from a unit connected to the radio Ethernet sub-network 34, converts it to a predetermined method, and sends the packet to a predetermined unit connected to the IEEE-1394 sub-network 32-3. The bridge 31-3 receives a packet from a unit connected to the IEEE-1394 sub-network 32-3, converts it to a predetermined-method packet, and sends the packet to a predetermined unit connected to the radio Ethernet sub-network 34.

If it is not necessary to separately identify the bridges 31-1 to 31-3, they are collectively called a bridge 31. If it is not necessary to separately identify the IEEE-1394 sub-networks 32-1 to 32-3, they are collectively called an IEEE-1394 sub-network 32.

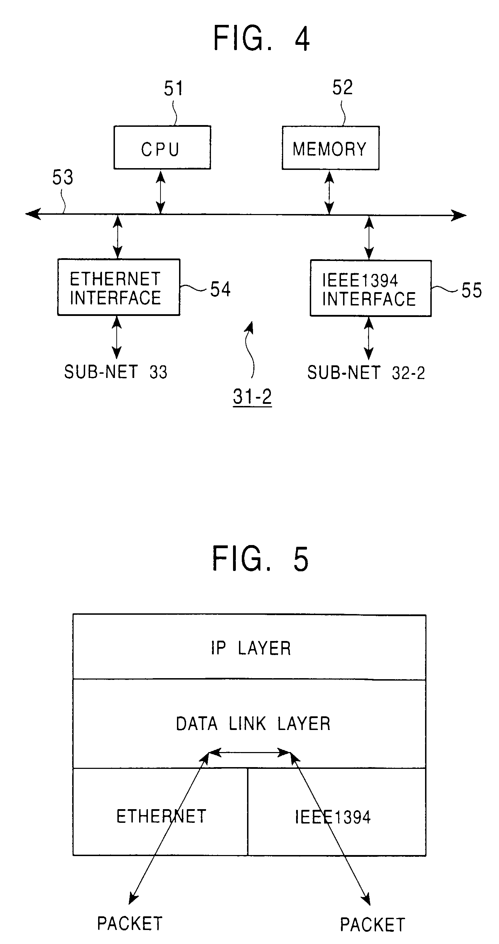

Fig. 4 is a block diagram showing the structure of the bridge 31-2. A central processing unit (CPU) 51 executes a program stored in a memory 52 to control the whole of the bridge 31, generates a predetermined link address according to a packet sent from an Ethernet interface 54 or from the IEEE-1394 interface 55, and stores the link address in the memory 52.

Fig. 5 is a view showing layers used for packet-rewriting processing executed in the bridge 31. The CPU 51 generates a predetermined link address according to the address information of the data-link header of a received packet and the link address of an address resolution protocol (ARP) packet, in a link layer. Processing in the IP layer controls the bridge 31. This processing may be omitted.

The memory 52 is formed of a random-access memory (RAM) or a read-only memory (ROM). It stores a program to be executed by the CPU 51 and data required for executing the program, such as a link address generated by the CPU 51, and sends a program instruction or data to the CPU 51, the Ethernet interface 54, or the IEEE-1394 interface 55 through a bus 53.

The bus 53 is a predetermined module bus, connects the CPU 51, the memory 52, the Ethernet interface 54, and the IEEE-1394 interface 55 to each other, and sends data output from any one of the CPU 51, the memory 52, the Ethernet interface 54, and the IEEE-1394 interface 55, to any of the CPU 51, the memory 52, the Ethernet interface 54, and the IEEE-1394 interface 55.

The Ethernet interface 54 is connected to the Ethernet sub-network 33 configured based on the Ethernet. Under the control of the CPU 51, the Ethernet interface 54 outputs the data of a packet received from the Ethernet sub-network 33 to the CPU 51 or to the IEEE-1394 interface 55; and generates a packet of a predetermined method according to data received from the CPU 51 or the IEEE-1394 interface 55 and outputs it to the Ethernet sub-network 33.

The IEEE-1394 interface 55 is connected to the IEEE-1394 sub-network 32-2 configured based on IEEE-1394. Under the control of the CPU 51, the IEEE-1394 interface 55 outputs the data of a packet received from the IEEE-1394 sub-network 32-2 to the CPU 51 or to the Ethernet interface 54; and generates a packet of a predetermined method according to data received from the CPU 51 or the Ethernet interface 54 and outputs it to the IEEE-1394 sub-network 32-2.

The bridge 31-1 has a radio-Ethernet interface in addition to the functions of the bridge 31-2. The physical layer of the radio-Ethernet interface of the bridge 31-1 corresponds to the radio Ethernet. Since the bridge 31-1 has a structure in which the radio-Ethernet interface is added to the structure of the bridge 31-2, and operates in the same way as the bridge 31-2, a description thereof will be omitted.

The bridge 31-3 has a radio-Ethernet interface in stead of the Ethernet interface 54 in the bridge 31-2. Since the bridge 31-3 is structured in the same way as the bridge 31-2 except for the interface, a description thereof will be omitted.

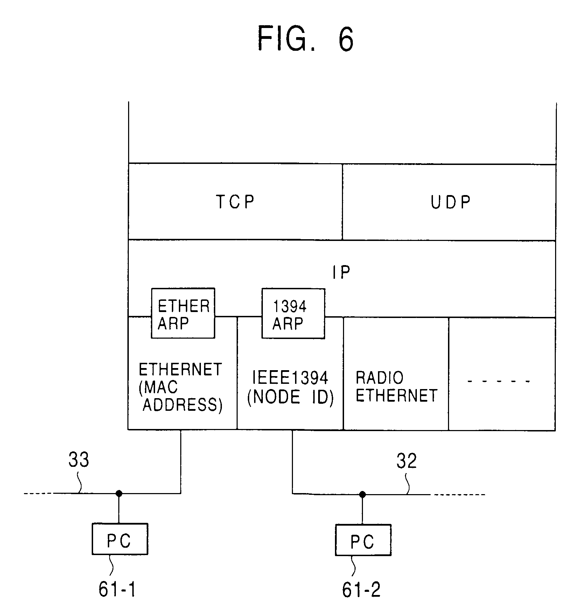

Fig. 6 is a view showing link-address rewriting processing executed in the bridge 31-2. When a personal computer 61-1 connected to the Ethernet sub-network 33 configured based on the Ethernet obtains the node ID serving as the link address of a personal computer 61-2 connected to the IEEE-1394 sub-network 32 configured based on IEEE 1394, for example, the link address corresponding to an ARP request in the ARP-request packet received by the Ethernet interface 54 is changed to a predetermined node ID, offset, or channel without any intervention of the IP layer.

The node ID and offset corresponding to an ARP response in the ART-response packet received by the IEEE-1394 interface 55 is changed to a predetermined MAC address without any intervention of the IP layer.

When the personal computer 61-1 connected to the Ethernet sub-network 33 configured based on the Ethernet sends predetermined data to the personal computer 61-2 connected to the IEEE-1394 sub-network 32-2 configured based on IEEE 1394, the MAC address serving as the address information of the data-link header of a packet which stores the predetermined data received by the Ethernet interface 54 is changed to a predetermined node ID or offset without any intervention of the IP layer.

When the personal computer 61-2 connected to the IEEE-1394 sub-network 32 configured based on IEEE 1394 obtains the link address (MAC address) of the personal computer 61-1 connected to the Ethernet sub-network 33 configured based on the Ethernet, for example, the node ID and offset serving as the address information of the data-link header of a packet which stores the predetermined data received by the IEEE-1394 interface 55 are changed to a predetermined MAC address without any intervention of the IP layer.

The MAC address corresponding to an ARP response in the ARP-response packet received by the Ethernet interface 54 is changed to a predetermined node ID or offset without any intervention of the IP layer.

When the personal computer 61-2 sends predetermined data to the personal computer 61-1, a predetermined node ID, offset, or channel of the ARP packet received by the IEEE-1394 interface 55 is changed to a predetermined MAC address without any intervention of the IP layer.

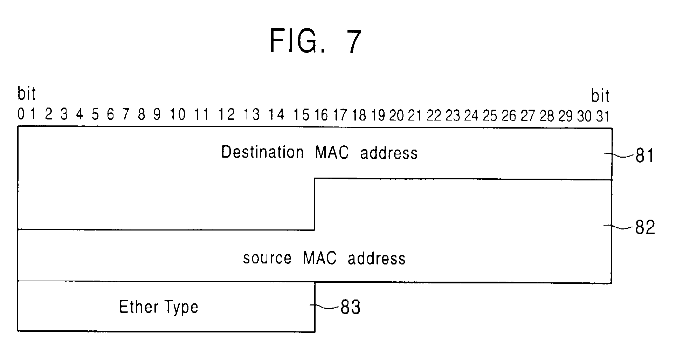

Fig. 7 is a view showing the structure of an Ethernet header disposed at the top of a packet to be transmitted through the Ethernet sub-network 33 configured based on the Ethernet. At the top of the Ethernet header, a 48-bit destination MAC address field 81 is disposed. The destination MAC address field 81 stores the MAC address of a unit which receives the packet.

In the Ethernet header, a 48-bit source MAC address field 82 is disposed following the destination MAC address field 81. The source MAC address field 82 stores the MAC address of a unit which sends the packet.

Following the source MAC address field 82, an Ether-type field 83 which stores 16-bit data indicating the type (such as ARP or IP) of data stored in the packet is disposed in the Ethernet header.

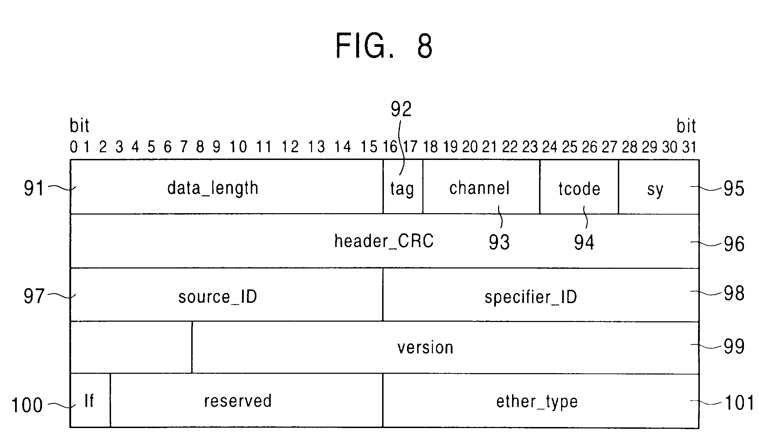

Fig. 8 is a view showing the structure of a 1394 header, which is the header of a broadcast packet in the IEEE-1394 sub-network 32 configured based on IEEE 1394. The 1394 header shown in Fig. 8 is formed of the header (first 64 bits of the packet in the first and second rows in the figure) of an isochronous packet to be broadcasted, specified by IEEE 1394-1995, the header (64 bits following the header of the isochronous packet in the third and fourth rows in the figure) of a global asynchronous stream packet (GASP) specified by P1394a, which is an extension of IEEE 1394, and an Encapsulation header (the last 32 bits in the fifth row in the figure) specified by Internet Engineering Task Force (IETF).

The header of an isochronous packet to be broadcasted, specified by IEEE 1394-1995, is formed of a data-length field 91, a tag field 92, a channel field 93, a t-code field 94, an sy field 95, and a header cyclic-redundancy-check (CRC) field 96.

The 16-bit data-length field 91, disposed at the top of the 1394 header of a packet to be broadcasted, stores data indicating the size of data block in the packet in units of bytes. Following the data-length field 91, the two-bit tag field 92 stores data indicating the type of the data block.

Following the tag field 92, the 6-bit channel field 93 stores the number (number identifying a stream) of a channel through which the packet is transmitted, the number being distributed by an isochronous resource manager. Following the channel field 93, the four-bit t-code field 94 stores a code indicating a packet method and a transaction method. The t-code field 94 of the packet to be broadcasted is set to 10.

The four-bit sy field 95, following the t-code field 94, is indefinite, and is usually set to 0.

The 32-bit header CRC field 96, following the sy field 95, stores cyclic-redundancy-check data for detecting an error of the packet.

Following the header CRC field 96, the fields of the GASP header specified by P1394a are disposed. The GASP header specified by P1394a is formed of a source ID field 97, a specifier_ID field 98, and a version field 99.

At the top of the GASP header, the 16-bit source ID field 97 is disposed. The source ID field 97 stores the node ID of a unit which transmits the packet. Following the source ID field, the specifier_ID field 98 is disposed and stores a 24-bit organizationally unique identifier (OUI) assigned by the IEEE Registration Authority.

The contents of the 24-bit version field 99, which follows the specifier_ID field 98, are determined by the organization corresponding to the OUI stored in the specifier_ID field 98.

Following the version field 99, the 32-bit encapsulation header specified by IETF is disposed. A two-bit 1f field 100 is disposed at the top of the encapsulation header and stores data indicating the order obtained when the data block is divided. When the data block is not divided, for example, the 1f field 100 is set to 0. When the top sub data block of the divided data block is stored in the packet, the 1f field 100 is set to 1.

The last 16 bits of the encapsulation header are used as an ether-type field 101, and store data indicating the type of the packet. When the Ether-type field 101 is 0x800, for example, the type of the packet is an IP. When the Ether-type field 101 is 0x806, the type of the packet is an ARP.

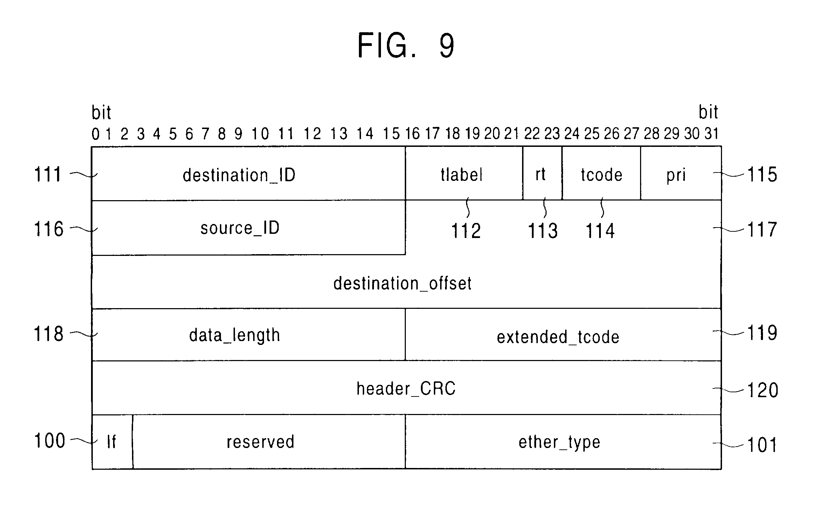

The structure of the 1394 header of a packet which requires a predetermined node to write a data block, transmitted through the IEEE-1394 sub-network 32 configured based on IEEE 1394, will be described below by referring to Fig. 9.

The 1394 header shown in Fig. 9 is formed of the header of an isochronous packet which requires a predetermined node to write a data block, specified by IEEE 1394-1995, and the encapsulation header specified by IETF.

The header of an isochronous packet which requires a predetermined node to write a data block, specified by IEEE 1394-1995, is formed of a destination-ID field 111, a transaction-label field 112, a retry-code field 113, a transaction-code field 114, a priority field 115, a source-ID field 116, a destination-offset field 117, a data-length field 118, an extended-transaction-code field 119, and a header CRC field 120.

At the top of the header of an isochronous packet which requires a predetermined node to write a data block, specified by IEEE 1394-1995, the 16-bit destination ID field 111 is disposed. The destination-ID field 111 stores the ID of a node which received the packet.

The 6-bit transaction-label field 112 is disposed following the destination-ID field 111, and stores data used for verifying a request packet and a response packet.

The two-bit retry-code field 113 is disposed following the transaction-label field 112. The retry-code field 113 stores data specifying a method for re-transmitting the packet.

Following the retry-code field 113, the four-bit transaction-code field 114 is disposed. The transaction-code field 114 stores data specifying the type of the packet and the type of the transaction. Following the transaction-code field 114, the four-bit priority field 115 is disposed and is not used for cable connection.

The source-ID field 116 follows the priority field 115, and stores the 16-bit node ID of a unit which transmits the packet.

The 48-bit destination-offset field 117 follows the source-ID field 116, and stores data specifying an address where the data stored in the packet is stored.

The data-length field 118 is disposed following the destination-offset field 117, and stores 16-bit data indicating the amount of the data stored in the packet. Following the data-length field 118, the extended-transaction-code field 119 is disposed. The extended-transaction-code field 119 stores a 16-bit extended transaction code.

The 32-bit header-CRC field 120 follows the extended-transaction-code field 119, and stores cyclic-redundancy-check data for detecting an error of the packet.

Following the header-CRC field 120, the 32-bit encapsulation header specified by IETF is disposed. Since the encapsulation header is the same as that shown in Fig. 8, a description thereof will be omitted.

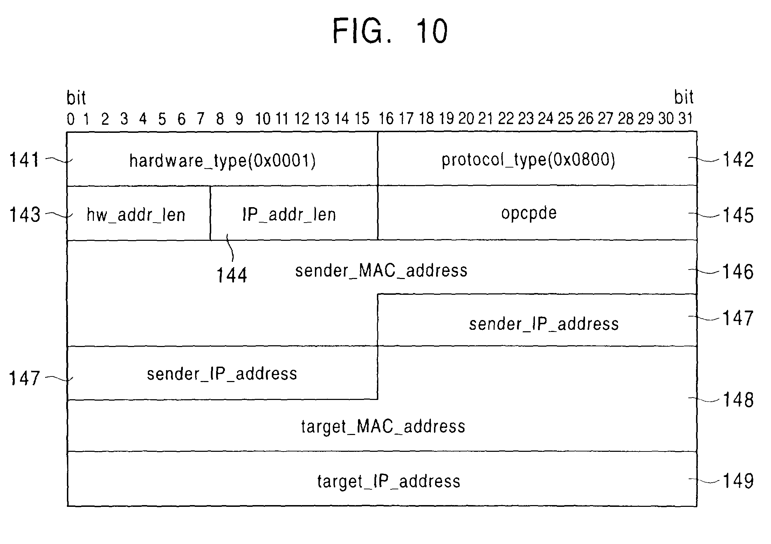

An ARP packet transmitted by a unit connected to the Ethernet sub-network 33 configured based on the Ethernet will be described below by referring to Fig. 10.

An ARP packet transmitted through the Ethernet sub-network 33 is formed of a hardware-type field 141, a protocol-type field 142, a hardware-address-length field 143, an IP-address-length field 144, an operation-code field 145, a sender-MAC-address field 146, a sender-IP-address field 147, a target-MAC-address field 148, and a target-IP-address field 149.

At the top of an ARP packet transmitted through the Ethernet sub-network 33, the 16-bit hardware-type field 141 is disposed. The hardware-type field 141 stores data indicating a hardware type, which is 0x0001 in this case. Following the hardware-type field 141, the 16-bit protocol-type field 142 is disposed. The protocol-type field 142 stores data indicating an ARP protocol type, which is 0x0800 in this case, representing IP.

Following the protocol-type field 142, the 8-bit hardware-address-length field 143 is disposed. The hardware-address-length field 143 stores data indicating the length of a hardware address, which is 6 in this case. Following the hardware-address-length field 143, the 8-bit IP-address-length field 144 is disposed. The IP-address-length field 144 stores data indicating the length of an IP address, which is 4 in this case.

Following the IP-address-length field 144, the operation-code field 145 is disposed. The operation-code field 145 stores a code used for determining an ARP request or an ARP response.

Following the operation-code field 145, the 48-bit sender-MAC-address field 146 is disposed. The sender-MAC-address field 146 stores the MAC address of the unit which has transmitted this packet.

Following the sender-MAC-address 146, the 32-bit sender-IP-address field 147 is disposed. The sender-IP-address field 147 stores the IP address of the unit which has transmitted the packet.

Following the sender-IP-address field 147, the 48-bit target-MAC-address 148 is disposed. The target-MAC-address 148 stores the MAC address of the unit which receives this packet. In an ARP-request packet, however, the target-MAC-address field 148 stores NULL.

Following the target-MAC-address field 148, the 32-bit target-IP-address field 149 is disposed. The target-IP-address field 149 stores the IP address of the unit which receives the packet.

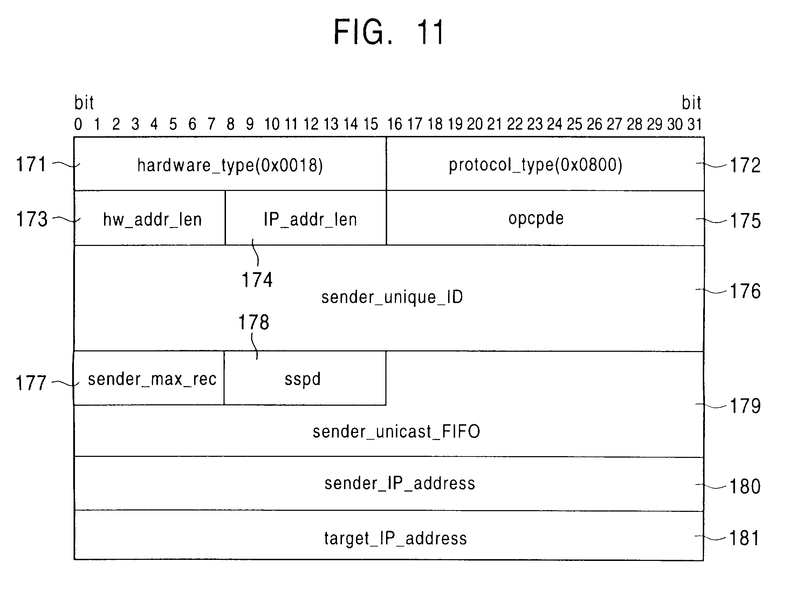

An ARP packet transmitted by a unit connected to the IEEE-1394 sub-network 32 configured based on IEEE 1394 will be described below by referring to Fig. 11.

An ARP packet transmitted through the IEEE-1394 sub-network 32 is formed of a hardware-type field 171, a protocol-type field 172, a hardware-address-length field 173, an IP-address-length field 174, an operation-code field 175, a sender-unique-ID field 176, a sender-maximum-payload field 177, a sender-maximum-communication-speed field 178, a sender-unicast-FIFO field 179, a sender-IP-address field 180, and a target-IP-address field 181.

At the top of an ARP packet transmitted through the IEEE-1394 sub-network 32 configured based on IEEE 1394, the 16-bit hardware-type field 171 is disposed. The hardware-type field 171 stores data indicating a hardware type, which is 0x0018 in this case. Following the hardware-type field 171, the 16-bit protocol-type field 172 is disposed. The protocol-type field 172 stores data indicating a protocol type, which is 0x0800 in this case.

Following the protocol-type field 172, the 8-bit hardware-address-length field 173 is disposed. The hardware-address-length field 173 stores data indicating the length of a hardware address, which is 16 in this case. Following the hardware-address-length field 173, the 8-bit IP-address-length field 174 is disposed. The IP-address-length field 174 stores data indicating the length of an IP address, which is 4 in this case.

Following the IP-address-length field 174, the operation-code field 175 is disposed. The operation-code field 175 stores a code used for determining an ARP request or an ARP response.

Following the operation-code field 175, the 64-bit sender-unique-ID field 176 is disposed. The sender-unique-ID field 176 stores the ID unique to the unit which has transmitted this packet. A unique ID is assigned to a unit connected to the IEEE-1394 sub-network 32 configured based on IEEE 1394 (an identical unique ID is not assigned to more than one unit), and always has the same value (unlike a node ID, the value of a unique ID does not change even if a bus configuration is changed.)

Following the sender-unique-ID field 176, the 8-bit sender-maximum-payload field 177 is disposed. The sender-maximum-payload field 177 stores data indicating the maximum payload which can be transmitted to the unit serving as the sender of the packet, which is stored at a predetermined address in the configuration ROM of the unit serving as the sender.

Following the sender-maximum-payload field 177, the 8-bit sender-maximum-communication-speed field 178 is disposed. The sender-maximum-communication-speed field 178 stores a code indicating the maximum communication speed of the unit serving as the sender of the packet.

Following the sender-maximum-communication-speed field 178, the 48-bit sender-unicast-FIFO field 179 is disposed. The sender-unicast-FIFO field 179 stores the 48-bit offset address of the unit serving as the sender. The offset address of the sender stored in the sender-unicast-FIFO field 179 is used, when another unit which receives this ARP packet transmits an IP packet, for specifying an offset where the IP packet is written.

Following the sender-unicast-FIFO field 179, the 32-bit sender-IP-address field 180 is disposed. The sender-IP-address field 180 stores the IP address of the unit which has transmitted the packet.

Following the sender-IP-address field 180, the 32-bit target-MAC-address 181 is disposed. The target-MAC-address 181 stores the IP address of the unit which receives this packet.

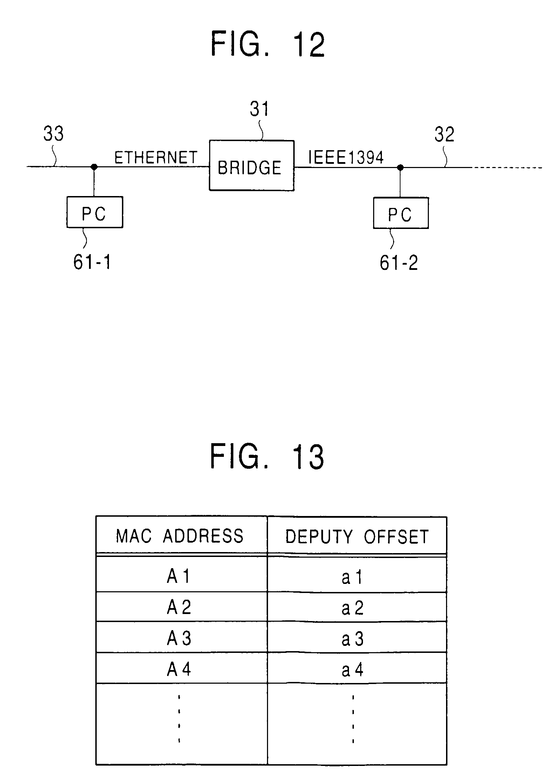

Next, processing in the bridge 31 to be executed when the personal computer 61-1 connected to the Ethernet sub-network 33 configured based on the Ethernet communicates with the personal computer 61-2 connected to the IEEE-1394 sub-network 32 configured based on IEEE 1394 as shown in Fig. 12 will be described below.

The bridge 31, for example, receives a packet sent from the personal computer 61-1 connected to the Ethernet sub-network 33 to the personal computer 61-2, converts it to a predetermined-format packet, and sends the packet to the personal computer 61-2 through the IEEE-1394 sub-network 32.

In the procedure of an ARP request, the bridge 31 receives an ARP-request packet transmitted from the personal computer 61-1, converts it to a predetermined-format packet, and sends the packet to all units connected to the IEEE-1394 sub-network 32 through the IEEE-1394 sub-network 32.

The bridge 31, for example, receives a packet sent from the personal computer 61-2 connected to the IEEE-1394 sub-network 32 to the personal computer 61-1, converts it to a predetermined-format packet, and sends the packet to the personal computer 61-1 through the Ethernet sub-network 33.

In the procedure of an ARP request, the bridge 31 receives an ARP-request packet transmitted from the personal computer 61-2, converts the format of the packet to a predetermined format, and sends it to all units connected to the IEEE-1394 sub-network 32 through the Ethernet sub-network 33.

Fig. 13 is a view of an Ethernet-1394 conversion table stored in the memory 52 of the bridge 31, used for generating a packet to be transmitted through the IEEE-1394 sub-network 32 from a packet transmitted through the Ethernet sub-network 33.

The Ethernet-1394 conversion table stores the deputy offsets corresponding to MAC addresses, generated by the CPU 51 of the bridge 31.

When the Ethernet interface 54 of the bridge 31 receives the ARP packet described by referring to Fig. 10, the CPU 51 of the bridge 31 determines whether the Ethernet-1394 conversion table stores the MAC address of the received packet. When it is determined that the Ethernet-1394 conversion table does not store the MAC address of the received packet, the CPU 51 generates a deputy offset which does not equal the deputy offsets stored in the Ethernet-1394 conversion table, and stores it in the Ethernet-1394 conversion table correspondingly to the MAC address of the received packet.

When a MAC address stored in the Ethernet-1394 conversion table is not accessed for a predetermined period of time specified in advance, the CPU 51 deletes the MAC address and the corresponding deputy offset.

As described above, the bridge 31 can store the deputy offset (not equal to the other deputy offsets) corresponding to a predetermined MAC address in the Ethernet-1394 conversion table.

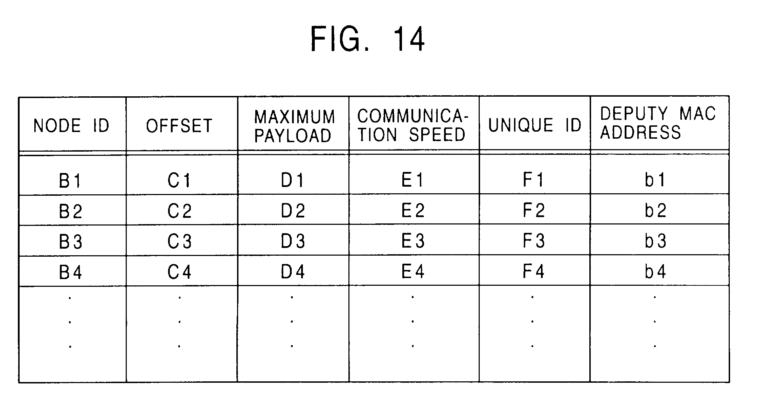

Fig. 14 is a view of a 1394-Ethernet conversion table stored in the memory 52 of the bridge 31, used for generating a packet to be transmitted through the Ethernet sub-network 33 from a packet transmitted through the IEEE-1394 sub-network 32.

The 1394-Ethernet conversion table stores the deputy MAC addresses corresponding to node IDs, offsets, the maximum payloads, the maximum communication speeds, and unique IDs, generated by the CPU 51 of the bridge 31.

When the IEEE-1394 interface 55 of the bridge 31 receives the ARP packet described by referring to Fig. 11, the CPU 51 of the bridge 31 determines whether the 1394-Ethernet conversion table stores the node ID and the offset of the transmission source of the received packet on the same row. When it is determined that the Ethernet-1394 conversion table does not store the node ID and the offset of the transmission source of the received packet on the same row, the CPU 51 generates a deputy MAC address which does not equal the deputy MAC addresses stored in the 1394-Ethernet conversion table, and stores it in the 1394-Ethernet conversion table, correspondingly to the node ID and the offset of the transmission source of the received packet.

The CPU 51 stores the maximum payload, the communication speed, and the unique ID stored in the received packet in the 1394-Ethernet conversion table correspondingly to the node ID and the offset of the transmission source.

When the IEEE-1394 sub-network 32 is configured again due to a bus reset or for some reason, node IDs are reassigned. Therefore, the CPU 51 of the bridge 31 reads the unique ID and the node ID of each unit connected to the IEEE-1394 sub-network 32, and changes the corresponding node ID stored in the 1394-Ethernet conversion table according to the unique ID stored in the 1394-Ethernet conversion table.

When a node ID and an offset stored in the 1394-Ethernet conversion table are not accessed for a predetermined period of time specified in advance, the CPU 51 deletes the data corresponding to the node ID and the offset.

As described above, the bridge 31 can store a deputy MAC address (not equal to the other deputy MAC addresses) in the 1394-Ethernet conversion table correspondingly to a predetermined node ID and offset.

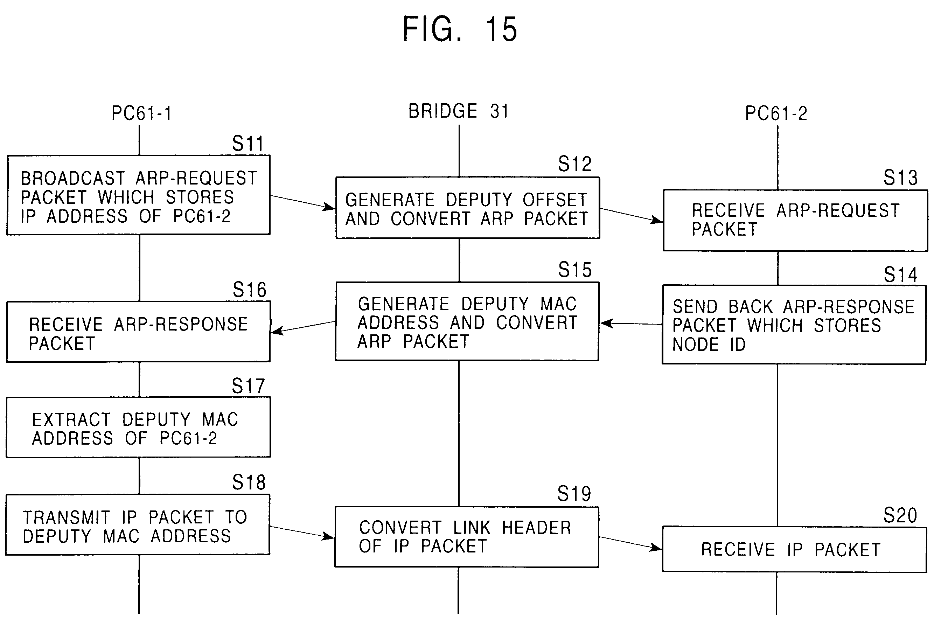

A procedure will be described below by referring to a flowchart shown in Fig. 15, in which the personal computer 61-1 connected to the Ethernet sub-network 33 sends data to the personal computer 61-2 connected to the IEEE-1394 sub-network 32.

In a step S11, the personal computer 61-1 stores the code indicating a request at the operation-code field 145 and the IP address corresponding to the personal computer 61-2 in the ARP packet described by referring to Fig. 10 which has the Ethernet header described with reference to Fig. 7, and broadcasts the packet to the Ethernet sub-network 33.

In a step S12, the Ethernet interface 54 of the bridge 31 receives the ARP request packet transmitted by the personal computer 61-1 through the Ethernet sub-network 33. The CPU 51 of the bridge 31 generates the deputy offset corresponding to the MAC address of the personal computer 61-1 stored in the ARP request packet, and stores the MAC address of the personal computer 61-1 and the corresponding deputy offset in the Ethernet-1394 conversion table. The IEEE-1394 interface 55 of the bridge 31 generates an ARP request packet, and broadcasts it to the IEEE-1394 sub-network 32 configured based on IEEE 1394.

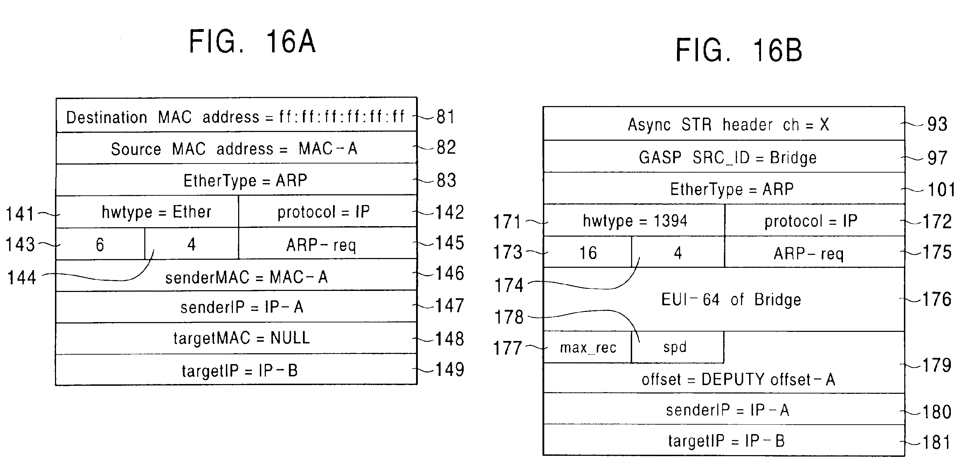

Figs. 16A and 16B show the ARP request packet which the bridge 31 receives from the personal computer 61-1 and the ARP request packet converted by the bridge 31 broadcasted to the IEEE-1394 sub-network 32, in the step S12, respectively.

Fig. 16A is an outlined view of an ARP request packet which the Ethernet interface 54 of the bridge 31 receives from the personal computer 61-1. The destination-MAC-address field 81 stores "ff:ff:ff:ff:ff:ff" indicating broadcasting. The source-MAC-address field 82 stores the MAC address of the personal computer 61-1, for example, MAC-A.

The Ether-type field 83 stores data indicating that the data stored in the packet is ARP-packet data.

The hardware-type field 141 stores 0x0001, which indicates the Ethernet. The protocol-type field 142 stores data indicating the ARP protocol type, which is 0x0800 in this case, showing IP.

The hardware-address-length field 143 stores data indicating the length of a hardware address, which is 6 in this case. The IP-address-length field 144 stores the length of an IP address, which is 4 in this case.

The operation-code field 145 stores the code indicating an ARP request. The sender-MAC-address field 146 stores the MAC address of the personal computer 61-1, MAC-A.

The sender-IP-address field 147 stores the IP address of the personal computer 61-1.

The target-MAC-address field 148 stores NULL because the packet is an ARP request packet. The target-IP-address field 149 stores the IP address of the personal computer 61-2.

Fig. 16B is an outlined view of an ARP request packet which the IEEE-1394 interface 55 of the bridge 31 broadcasts to the IEEE-1394 sub-network 32 in the step S12.

The channel field 93 stores a predetermined channel, for example, "x." The source-ID field 97 stores the node ID of the bridge 31. The Ether-type field 101 stores 0x806, which indicates an ARP.

The hardware-type field 171 stores 0x0018, which indicates IEEE 1394. The protocol-type field 172 stores 0x0800, which indicates IP.

The hardware-address-length field 173 stores data indicating the length of a hardware address, which is 16 in this case. The IP-address-length field 174 stores the length of an IP address, which is 4 in this case.

The operation-code field 175 stores the code indicating an ARP request. The sender-unique-ID field 176 stores the unique ID of the bridge 31.

The sender-maximum-payload field 177 stores data indicating the maximum payload of the bridge 31. The sender-maximum-communication-speed field 178 stores a code indicating the maximum communication speed of the bridge 31.

The sender-unicast-FIFO field 179 stores the deputy offset which the bridge 31 has generated correspondingly to MAC-A, for example, deputyoffset_A.

The sender-IP-address field 180 stores the IP address of the personal computer 61-1, IP-A. The target-IP-address field 181 stores the IP address of the personal computer 61-2, IP-B.

In a step S13, the personal computer 61-2 receives the ARP request packet which the bridge 31 has broadcasted through the IEEE-1394 sub-network 32.

In a step S14, the personal computer 61-2 generates an ARP response packet which includes the node ID and the offset of the personal computer 61-2, and sends it back through the IEEE-1394 sub-network 32 configured based on IEEE 1394.

In a step S15, the IEEE-1394 interface 55 of the bridge 31 receives the ARP response packet sent back from the personal computer 61-2. The CPU 51 of the bridge 31 generates the deputy MAC address corresponding to the node ID and the offset included in the ARP response packet, and stores the node ID and the offset of the personal computer 61-2 and the corresponding deputy MAC address in the 1394-Ethernet conversion table. The Ethernet interface 54 of the bridge 31 generates an ARP response packet, and sends it to the personal computer 61-1 through the Ethernet sub-network 33 configured based on the Ethernet.

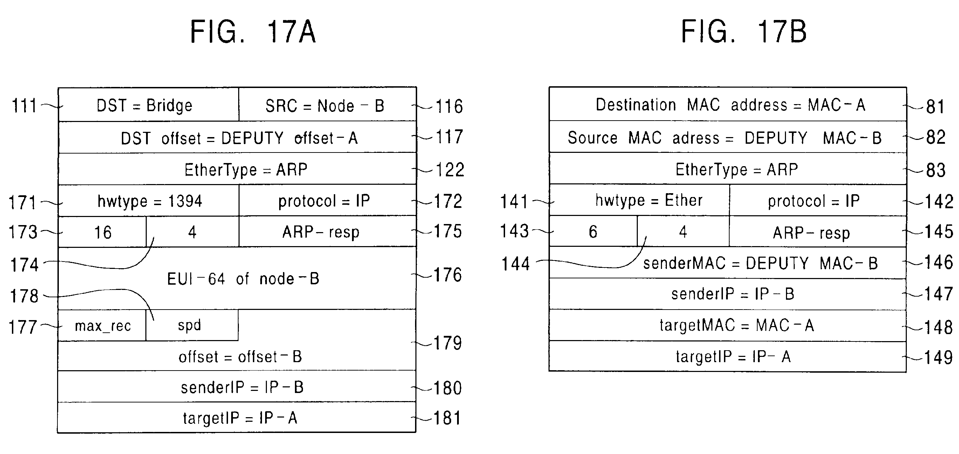

Figs. 17A and 17B show the ARP response packet which the IEEE-1394 interface 55 of the bridge 31 receives from the personal computer 61-2 and the ARP response packet which the Ethernet interface 54 of the bridge 31 sends to the personal computer 61-1 through the Ethernet sub-network 33, in the step S15, respectively.

Fig. 17A is an outlined view of the ARP response packet which the IEEE-1394 interface 55 of the bridge 31 receives from the personal computer 61-2 through the IEEE-1394 sub-network 32.

The destination-ID field 111 stores the node ID of the bridge 31. The source-ID field 116 stores the node ID of the personal computer 61-2. The destination-offset field 117 stores the deputy offset (received in the step S13) corresponding to the personal computer 61-1. The Ether-type field 101 stores 0x806, which indicates an ARP.

The hardware-type field 171 stores 0x0018, which indicates IEEE 1394. The protocol-type field 172 stores 0x0800, which indicates IP.

The hardware-address-length field 173 stores data indicating the length of a hardware address, which is 16 in this case. The IP-address-length field 174 stores the length of an IP address, which is 4 in this case.

The operation-code field 175 stores the code indicating an ARP request. The sender-unique-ID field 176 stores the unique ID of the personal computer 61-2.

The sender-maximum-payload field 177 stores data indicating the maximum payload of the personal computer 61-2. The sender-maximum-communication-speed field 178 stores a code indicating the maximum communication speed of the personal computer 61-2.

The sender-unicast-FIFO field 179 stores the predetermined offset of the personal computer 61-2.

The sender-IP-address field 180 stores the IP address of the personal computer 61-2, IP-B. The target-IP-address field 181 stores the IP address of the personal computer 61-1, IP-A.

Fig. 17B is an outlined view of the ARP response packet which the Ethernet interface 54 of the bridge 31 sends to the personal computer 61-1. The destination-MAC-address field 81 stores the MAC address of the personal computer 61-1, MAC-A. The source-MAC-address field 82 stores the deputy MAC address of the personal computer 61-2 generated by the bridge 31, for example, MAC-B.

The Ether-type field 83 stores data indicating that the data stored in the packet is ARP-packet data.

The hardware-type field 141 stores 0x0001, which indicates the Ethernet. The protocol-type field 142 stores data indicating the ARP protocol type, which is 0x0800 in this case, showing IP.

The hardware-address-length field 143 stores data indicating the length of a hardware address, which is 6 in this case. The IP-address-length field 144 stores the length of an IP address, which is 4 in this case.

The operation-code field 145 stores the code indicating an ARP response. The sender-MAC-address field 146 stores the deputy MAC address corresponding to the personal computer 61-2 generated by the bridge 31, MAC-B. The sender-IP-address field 147 stores the IP address of the personal computer 61-2.

The target-MAC-address field 148 stores the MAC address of the personal computer 61-1. The target-IP-address field 149 stores the IP address of the personal computer 61-1.

Back to Fig. 15, in a step S16, the personal computer 61-1 receives the ARP response packet from the bridge 31. In a step S17, the personal computer 61-1 extracts the MAC address (deputy MAC address generated by the bridge 31, MAC-B) corresponding to the personal computer 61-2 from the received ARP response packet.

In a step S18, the personal computer 61-1 sends an IP packet to the MAC address extracted in the step S17. In a step S19, the Ethernet interface 54 of the bridge 31 receives the IP packet sent from the personal computer 61-1, and the IEEE-1394 interface 55 of the bridge 31 generates a 1394 header according to data stored in the Ethernet-1394 conversion table and sends it to the personal computer 61-2.

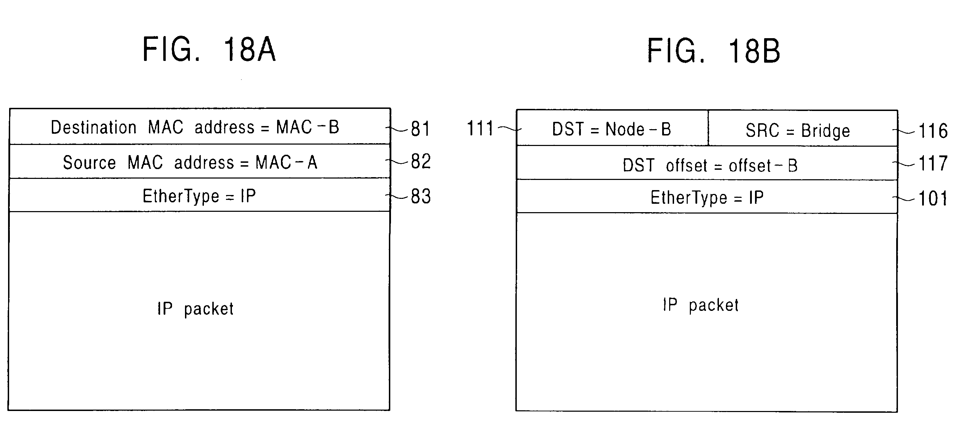

Figs. 18A and 18B show the IP packet which the Ethernet interface 54 of the bridge 31 receives from the personal computer 61-1 and the IP packet which the IEEE-1394 interface 55 of the bridge 31 sends to the personal computer 61-2, in the step S19, respectively.

Fig. 18A is an outlined view of the IP packet which the Ethernet interface 54 of the bridge 31 receives from the personal computer 61-1. The destination-MAC-address field 81 stores the deputy MAC address corresponding to the personal computer 61-2, MAC-B. The source-MAC-address field 82 stores the MAC address of the personal computer 61-1, MAC-A.

The Ether-type field 83 stores data indicating that the data stored in the packet is IP-packet data. Following the Ether-type field 83, the IP packet which stores the data transmitted to the personal computer 61-2 is disposed.

Fig. 18B is an outlined view of the IP packet which the IEEE-1394 interface 55 of the bridge 31 sends to the personal computer 61-2. The destination-ID field 111 stores the node ID, node B, of the personal computer 61-2 stored in the 1394-Ethernet conversion table correspondingly to the deputy MAC address, MAC-B.

The source-ID field 116 stores the node ID of the bridge. The destination-offset field 117 stores the offset stored in the 1394-Ethernet conversion table correspondingly to the deputy MAC address, MAC-B. The Ether-type field 101 stores data indicating IP.

Following the Ether-type field 101, the IP packet (received from the personal computer 61-1) which stores the data transmitted to the personal computer 61-2 is disposed.

In a step S20, the personal computer 61-2 receives the IP packet transmitted from the bridge 31.

As described above, without any complicated settings, the bridge 31 receives a packet transmitted from the personal computer 61-1 or 61-2 and converts it in response to an ARP request sent from the personal computer 61-1, so that the personal computer 61-1 sends data to the personal computer 61-2.

When the personal computer 61-1 knows the deputy MAC address corresponding to the personal computer 61-2 (stores the deputy MAC address after ARP processing is once executed), it sends predetermined data to the personal computer 61-2 by the process in the step S18. The bridge 31 converts an IP packet sent from the personal computer 61-1 by the process in the step S19.

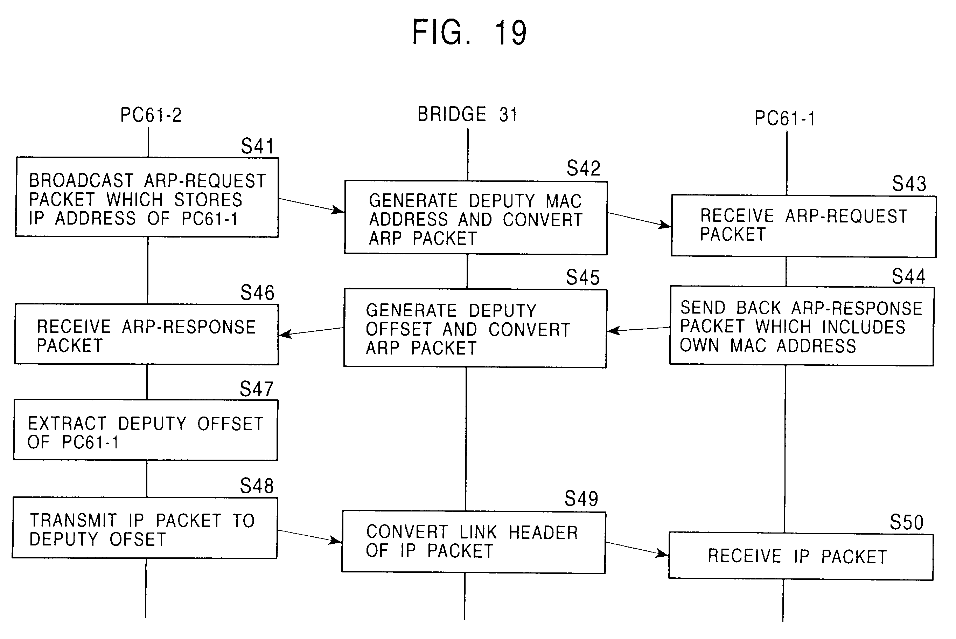

A procedure will be described below by referring to a flowchart shown in Fig. 19, in which the personal computer 61-2 connected to the IEEE-1394 sub-network 32 sends data to the personal computer 61-1 connected to the Ethernet sub-network 33.

In a step S41, the personal computer 61-2 stores the code indicating a request at the operation-code field 175 and the IP address corresponding to the personal computer 61-1 in the ARP packet described by referring to Fig. 11 which has the 1394 header of the packet to be broadcasted described with reference to Fig. 8, and broadcasts it to the IEEE-1394 sub-network 32.

In a step S42, the IEEE-1394 interface 55 of the bridge 31 receives the ARP request packet transmitted by the personal computer 61-2 through the IEEE-1394 sub-network 32. The CPU 51 generates the deputy MAC address corresponding to the node ID and the offset of the personal computer 61-2 stored in the ARP request packet, and stores the node ID and the offset of the personal computer 61-2 and the corresponding deputy MAC address in the 1394-Ethernet conversion table. The Ethernet interface 54 of the bridge 31 generates an ARP request packet, and broadcasts it to the Ethernet sub-network 33.

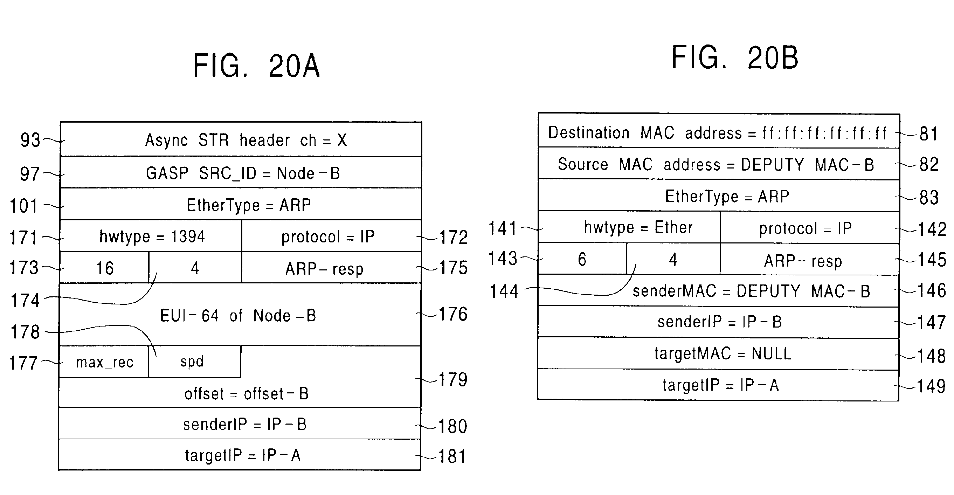

Figs. 20A and 20B show the ARP request packet which the IEEE-1394 interface 55 of the bridge 31 receives from the personal computer 61-2 and the ARP request packet which the Ethernet interface 54 of the bridge 31 broadcasts to the Ethernet sub-network 33, in the step S42, respectively.

Fig. 20A is an outlined view of an ARP request packet which the IEEE-1394 interface 55 of the bridge 31 receives from the personal computer 61-2. The channel field 93 stores a predetermined channel, for example, "x." The source-ID field 97 stores the node ID of the personal computer 61-2, for example, node B. The Ether-type field 101 stores 0x806, which indicates an ARP.

The hardware-type field 171 stores 0x0018, which indicates IEEE 1394. The protocol-type field 172 stores 0x0800, which indicates IP.

The hardware-address-length field 173 stores data indicating the length of a hardware address, which is 16 in this case. The IP-address-length field 174 stores the length of an IP address, which is 4 in this case.

The operation-code field 175 stores the code indicating an ARP request. The sender-unique-ID field 176 stores the unique ID of the personal computer 61-2.

The sender-maximum-payload field 177 stores data indicating the maximum payload of the personal computer 61-2. The sender-maximum-communication-speed field 178 stores a code indicating the maximum communication speed of the personal computer 61-2.

The sender-unicast-FIFO field 179 stores the node ID of the personal computer 61-2 and a predetermined offset.

The sender-IP-address field 180 stores the IP address of a transmission source, actually the IP address of the personal computer 61-2, IP-B. The target-IP-address field 181 stores the IP address of the personal computer 61-1, for example, IP-A.

Fig. 20B is an outlined view of an ARP request packet which the Ethernet interface 54 of the bridge 31 broadcasts to the Ethernet sub-network 33. The destination-MAC-address field 81 stores "ff:ff:ff:ff:ff:ff" indicating broadcasting. The source-MAC-address field 82 stores the deputy MAC address generated by the bridge 31, for example, MAC-B, corresponding to the node ID, node B, of the personal computer 61-2 and the offset stored in the sender-unicast-FIFO field 179.

The Ether-type field 83 stores data indicating that the data stored in the packet is ARP-packet data.

The hardware-type field 141 stores 0x0001, which indicates the Ethernet. The protocol-type field 142 stores data indicating the ARP protocol type, which is 0x0800 in this case, showing IP.

The hardware-address-length field 143 stores data indicating the length of a hardware address, which is 6 in this case. The IP-address-length field 144 stores the length of an IP address, which is 4 in this case.

The operation-code field 145 stores the code indicating an ARP request. The sender-MAC-address field 146 stores the deputy MAC address corresponding to the personal computer 61-2, MAC-B.

The sender-IP-address field 147 stores the IP address of the personal computer 61-2, IP-B.

The target-MAC-address field 148 stores NULL because the packet is an ARP request packet. The target-IP-address field 149 stores the IP address of the personal computer 61-1, IP-A.

In a step S43, the personal computer 61-2 receives the ARP request packet which the bridge 31 has broadcasted through the Ethernet sub-network 33.

In a step S44, the personal computer 61-1 generates an ARP response packet which includes the MAC address of the personal computer 61-1, and sends it back through the Ethernet sub-network 33.

In a step S45, the Ethernet interface 54 of the bridge 31 receives the ARP response packet sent from the personal computer 61-1. The CPU 51 generates the deputy offset corresponding to the MAC address included in the ARP response packet, and stores the MAC address of the personal computer 61-1 and the corresponding deputy offset in the Ethernet-1394 conversion table. The IEEE-1394 interface 55 of the bridge 31 generates an ARP response packet, and sends it to the personal computer 61-2 through the IEEE-1394 sub-network 32.

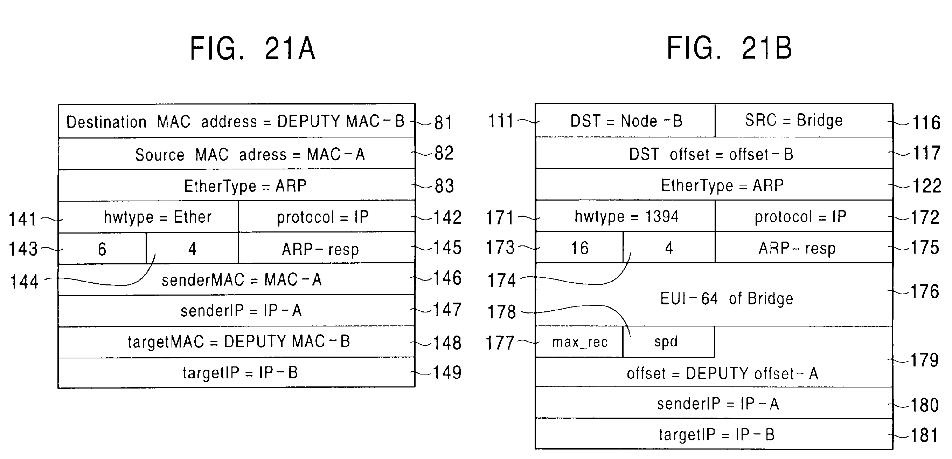

Figs. 21A and 21B show the ARP response packet which the Ethernet interface 54 of the bridge 31 receives from the personal computer 61-1 and the ARP response packet which the IEEE-1394 interface 55 of the bridge 31 sends to the personal computer 61-2 through the IEEE-1394 sub-network 32, in the step S45, respectively.

Fig. 21A is an outlined view of an ARP response packet which the Ethernet interface 54 of the bridge 31 receives from the personal computer 61-1 through the Ethernet sub-network 33. The destination-MAC-address field 81 stores the deputy MAC address generated by the bridge 31, corresponding to the personal computer 61-2, MAC-B (received in the step S43). The source-MAC-address field 82 stores the MAC address of the personal computer 61-1, for example, MAC-A.

The Ether-type field 83 stores data indicating that the data stored in the packet is ARP-packet data.

The hardware-type field 141 stores 0x0001, which indicates the Ethernet. The protocol-type field 142 stores data indicating the ARP protocol type, which is 0x0800 in this case, showing IP.

The hardware-address-length field 143 stores data indicating the length of a hardware address, which is 6 in this case. The IP-address-length field 144 stores the length of an IP address, which is 4 in this case.

The operation-code field 145 stores the code indicating an ARP response. The sender-MAC-address field 146 stores the MAC address of the personal computer 61-1, MAC-A. The sender-IP-address field 147 stores the IP address of the personal computer 61-1, IP-A.

The target-MAC-address field 148 stores the deputy MAC address generated by the bridge, corresponding to the personal computer 61-2, MAC-B (received in the step S43). The target-IP-address field 149 stores the IP address of the personal computer 61-2, IP-B.

Fig. 21B is an outlined view of an ARP response packet which the IEEE-1394 interface 55 of the bridge 31 sends to the personal computer 61-2. The destination-ID field 111 stores the node ID of the personal computer 61-2, node B. The source-ID field 116 stores the node ID of the bridge 31. The destination-offset field 117 stores the offset B corresponding to the personal computer 61-2. The Ether-type field 101 stores 0x806, which indicates an ARP.

The hardware-type field 171 stores 0x0018, which indicates IEEE 1394. The protocol-type field 172 stores 0x0800, which indicates IP.

The hardware-address-length field 173 stores data indicating the length of a hardware address, which is 16 in this case. The IP-address-length field 174 stores the length of an IP address, which is 4 in this case.

The operation-code field 175 stores the code indicating an ARP request. The sender-unique-ID field 176 stores the unique ID of the bridge 31.

The sender-maximum-payload field 177 stores data indicating the maximum payload of the bridge 31. The sender-maximum-communication-speed field 178 stores a code indicating the maximum communication speed of the bridge 31.

The sender-unicast-FIFO field 179 stores the node ID of the bridge 31, and the deputy offset generated by the bridge 31, corresponding to the personal computer 61-1.

The sender-IP-address field 180 stores the IP address of the personal computer 61-1, IP-A. The target-IP-address field 181 stores the IP address of the personal computer 61-2, IP-B.

Back to Fig. 19, in a step S46, the personal computer 61-2 receives the ARP response packet from the bridge 31. In a step S47, the personal computer 61-2 extracts the deputy offset (deputy offset generated by the bridge 31, corresponding to the personal computer 61-1) from the received ARP response packet.

In a step S48, the personal computer 61-2 sends an IP packet to the deputy offset extracted in the step S47. In a step S49, the IEEE-1394 interface 55 of the bridge 31 receives the IP packet sent from the personal computer 61-2. The Ethernet interface 54 of the bridge 31 generates an Ethernet header according to data stored in the 1394-Ethernet conversion table and sends it to the personal computer 61-1.

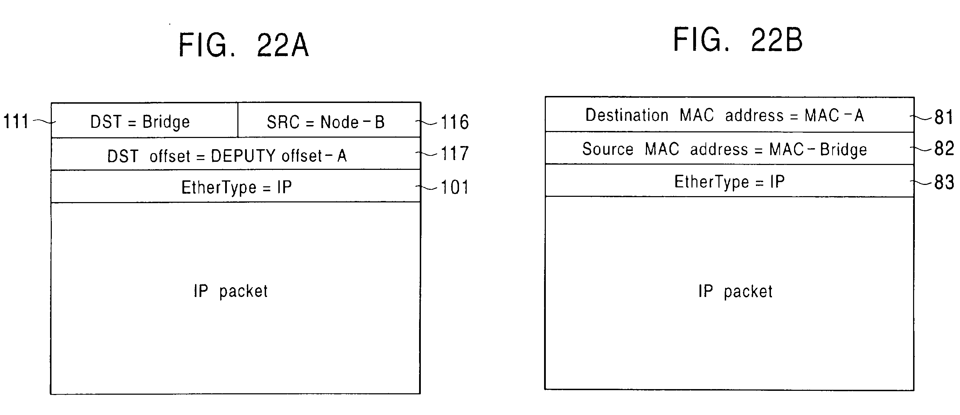

Figs. 22A and 22B show the IP packet which the IEEE-1394 interface 55 of the bridge 31 receives from the personal computer 61-2 and the IP packet which the Ethernet interface 54 of the bridge 31 sends to the personal computer 61-1, in the step S49.

Fig. 22A is an outlined view of an IP packet which the IEEE-1394 interface 55 of the bridge 31 receives from the personal computer 61-2. The destination-ID field 111 stores the node ID of the bridge 31. The source-ID field 116 stores the node ID of the personal computer 61-2, node B.

The destination-offset field 117 stores the deputy offset A stored in the Ethernet-1394 conversion table correspondingly to MAC-A. The Ether-type field 101 stores data indicating IP.

Following the Ether-type field 101, the IP packet (received from the personal computer 61-2) which stores the data transmitted to the personal computer 61-1 is disposed.

Fig. 22B is an outlined view of the IP packet which the Ethernet interface 54 of the bridge 31 sends to the personal computer 61-1. The destination-MAC-address field 81 stores the MAC address of the personal computer 61-1, MAC-A. The source-MAC-address field 82 stores the MAC address of the bridge 31.

The Ether-type field 83 stores data indicating that the data stored in the packet is IP-packet data. Following the Ether-type field 83, the IP packet which stores the data transmitted to the personal computer 61-1 is disposed.

In a step S50, the personal computer 61-1 receives the IP packet transmitted from the bridge 31.

As described above, without any complicated settings, the bridge 31 receives a packet transmitted from the personal computer 61-1 or 61-2 and converts it in response to an ARP request sent from the personal computer 61-2, so that the personal computer 61-2 sends data to the personal computer 61-1.

When the personal computer 61-2 knows the deputy offset corresponding to the personal computer 61-1 (stores the deputy MAC address after ARP processing is once executed), it sends predetermined data to the personal computer 61-1 by the process in the step S48. The bridge 31 converts an IP packet sent from the personal computer 61-2 by the process in the step S49.

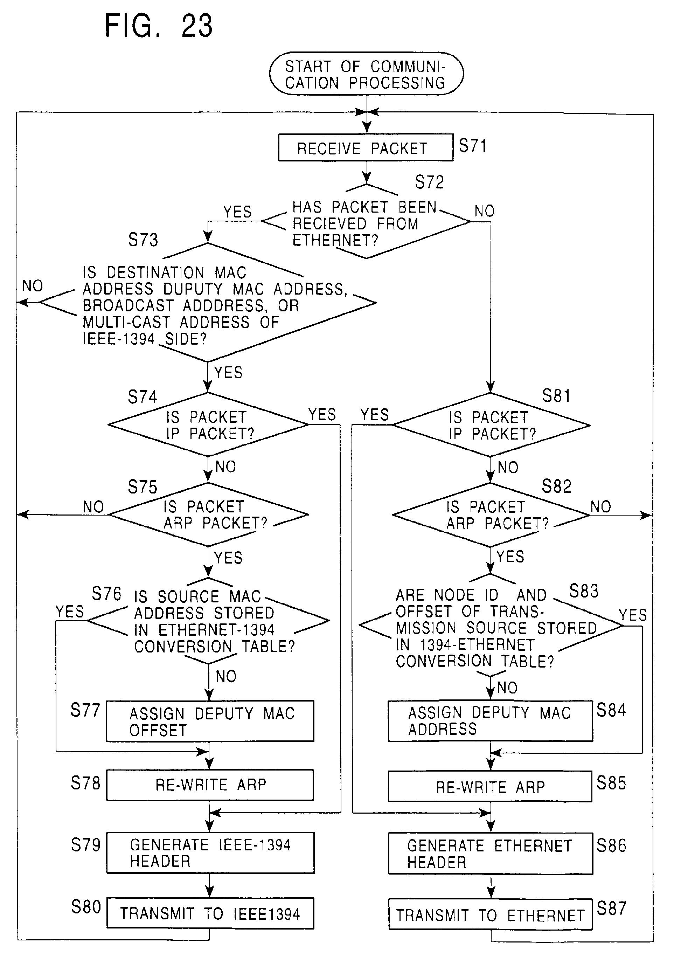

Communication processing executed in the bridge 31 will be described below by referring to a flowchart shown in Fig. 23. In a step S71, the Ethernet interface 54 of the bridge 31 receives a transmitted packet through the Ethernet sub-network 33. Alternatively, the IEEE-1394 interface 55 receives a transmitted packet through the IEEE-1394 sub-network 32.

In a step S72, the CPU 51 of the bridge 31 determines according to a signal sent from the Ethernet interface 54 or the IEEE-1394 interface 55 whether the packet received in the step S71 is an Ethernet packet received by the Ethernet interface 54. When it is determined that it is an Ethernet packet received by the Ethernet interface 54, the processing proceeds to a step S73 and it is determined whether the destination MAC address stored in the destination-MAC-address field 81 is the deputy MAC address, the broadcast address, or the multi-cast address of a unit connected to the IEEE-1394 sub-network 32.

When it is determined in the step S73 that the destination MAC address stored in the destination-MAC-address field 81 is the deputy MAC address, the broadcast address, or the multi-cast address of a unit connected to the IEEE-1394 sub-network 32, the processing proceeds to a step S74 and the CPU 51 determines according to the value of the Ether-type field 83 whether the received packet is an IP packet. When it is determined that the received packet is not an IP packet, the processing proceeds to a step S75 and it is determined according to the value of the Ether-type field 83 whether the received packet is an ARP packet.

When it is determined in the step S75 that the received packet is an ARP packet, the processing proceeds to a step S76 and the CPU 51 determines whether the MAC address stored in the source-MAC-address field 82 is stored in the Ethernet-1394 conversion table. When it is determined that the MAC address stored in the source-MAC-address field 82 is not stored in the Ethernet-1394 conversion table, the processing proceeds to a step S77, and the deputy offset corresponding to the MAC address stored in the source-MAC-address field 82 is generated, and is stored in the Ethernet-1394 conversion table.

When it is determined in the step S76 that the MAC address stored in the source-MAC-address field 82 is stored in the Ethernet-1394 conversion table, the step S77 is skipped and the processing proceeds to a step S78.

In the step S78, the CPU 51 makes the IEEE-1394 interface 55 change the ARP packet to the IEEE-1394 ARP packet shown in Fig. 11. In a step S79, the CPU 51 makes the IEEE-1394 interface 55 generate an IEEE-1394 header having the format shown in Fig. 8 or Fig. 9.

In a step S80, the CPU 51 makes the IEEE-1394 interface 55 send the packet, the processing returns to the step S71, and the communication processing is repeated.

When it is determined in the step S73 that the destination MAC address stored in the destination-MAC-address field 81 is not the deputy MAC address, the broadcast address, or the multi-cast address of a unit connected to the IEEE-1394 sub-network 32, since the packet is not to be transmitted to the IEEE-1394 sub-network 32, the processing returns to the step S71 and the communication processing is repeated.

When it is determined in the step S74 that the received packet is an IP packet, since the packet is not an ARP packet, the processing proceeds to the Step S79. The CPU 51 changes the link header of the IP packet according to the Ethernet-1394 conversion table and sends the packet to the IEEE-1394 interface 55.

When it is determined in the step S75 that the received packet is not an ARP packet, since the bridge 31 cannot process the packet, the processing returns to the step S71 and the communication processing is repeated.

When it is determined in the step S72 that the packet received in the step S71 is not an Ethernet packet received by the Ethernet interface 54, since the packet is an IEEE-1394 packet received by the IEEE-1394 interface 55, the processing proceeds to a step S81 and the CPU 51 determines according to the value of the Ether-type field 101 whether the received packet is an IP packet. When it is determined that the received packet is not an IP packet, the processing proceeds to a step S82 and it is determined whether the received packet is an ARP packet according to the value of the Ether-type field 101.

When it is determined in the step S82 that the received packet is an ARP packet, the processing proceeds to a step S83 and the CPU 51 determines whether the node ID stored in the source-ID field 116 and the offset stored in the destination-offset field 117 are stored in the 1394-Ethernet conversion table. When it is determined that the node ID stored in the source-ID field 116 and the offset stored in the destination-offset field 117 are not stored in the 1394-Ethernet conversion table, the processing proceeds to a step S84, and the deputy MAC address corresponding to the node ID stored in the source-ID field 116 and the offset stored in the destination-offset field 117 is generated and stored in the 1394-Ethernet conversion table.

When it is determined in the step S83 that the node ID stored in the source-ID field 116 and the offset stored in the destination-offset field 117 are stored in the 1394-Ethernet conversion table, the step S84 is skipped and the processing proceeds to a step S85.

In the step S85, the CPU 51 makes the Ethernet interface 54 change the ARP packet to the Ethernet ARP packet shown in Fig. 10. In a step S86, the CPU 51 makes the Ethernet interface 54 generate an Ethernet header having the format shown in Fig. 7.

In a step S87, the CPU 51 sends the packet to the Ethernet interface 54, the processing returns to the step S71, and the communication processing is repeated.

When it is determined in the step S81 that the received packet is an IP packet, since it is not an ARP packet, the processing proceeds to the step S86. The CPU 51 rewrites the link header of the IP packet according to the 1394-Ethernet conversion table, and makes the Ethernet interface 54 send the packet.

When it is determined in the step S82 that the received packet is not an ARP packet, since the bridge 31 cannot process the packet, the processing returns to the step S71 and the communication processing is repeated.

As described above, without using the IP address, the bridge 31 can change the IEEE-1394 packet to an Ethernet packet and send it, and change the Ethernet packet to an IEEE-1394 packet and send it.

As described above, without any complicated settings, the bridge 31 allows units connected to sub-nets employing different methods to communicate with each other by simple network management. The bridge 31 can have a simpler structure than the router 1.

With the use of the bridge 31, the number of sub-net addresses can be reduced.

The series of processing described above can be implemented by hardware or software. When the series of processing is achieved by software, a program constituting the software is installed into a computer which is built in the bridge serving as special hardware or into a general-purpose computer which executes various types of processing with various types of programs installed.

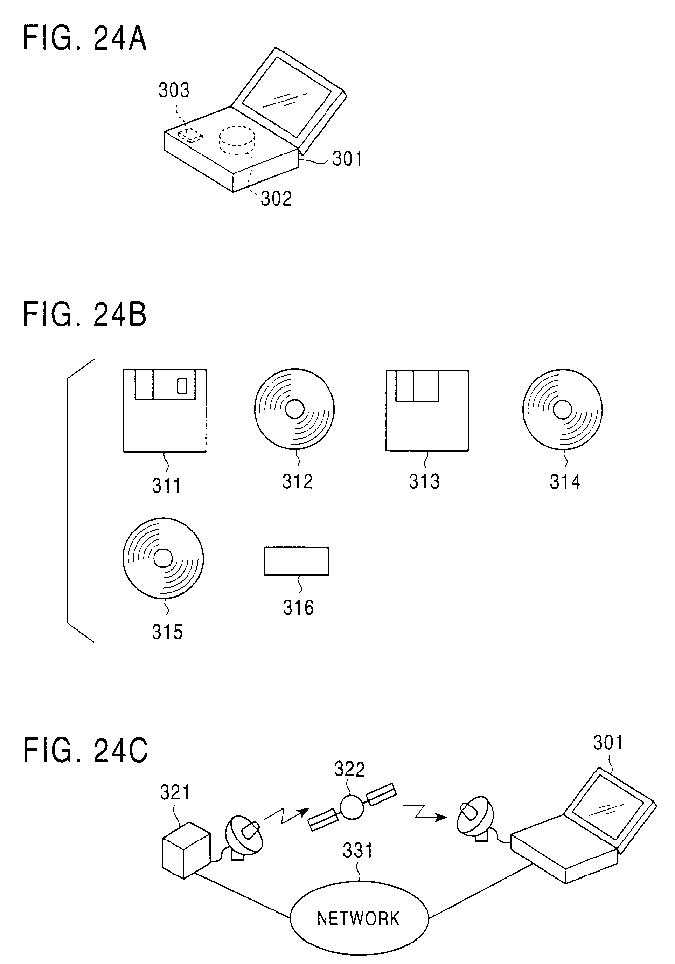

Media used for installing the program for executing the series of processing described above and for making it executable by a computer will be described below for a example case in which the computer is a general-purpose personal computer, by referring to Figs. 24A, 24B, and 24C.

The program can be provided for the user in a condition in which it is installed in advance into a hard disk 302 or a semiconductor memory 303 serving as a recording medium which is built in a personal computer 301, as shown in Fig. 24A.

Alternatively, the program is provided as package software in a condition in which it is recorded temporarily or perpetually into recording media, such as a floppy disk 311, a compact disc read-only memory (CD-ROM) 312, a magneto-optical (MO) disk 313, a digital versatile disk (DVD) 314, a magnetic disk 315, and a semiconductor memory 316, as shown in Fig. 24B.

Alternatively, the program is transferred by radio from a downloading site 321 to the personal computer 301 through an artificial satellite 322 for digital satellite broadcasting, or to the personal computer 301 by wire through a network 331 such as a local area network or the Internet; and is installed into the hard disk 302, built in the personal computer 301, as shown in Fig. 24C.

The term "media" indicates a wide concept including all of the above media, in the present specification.

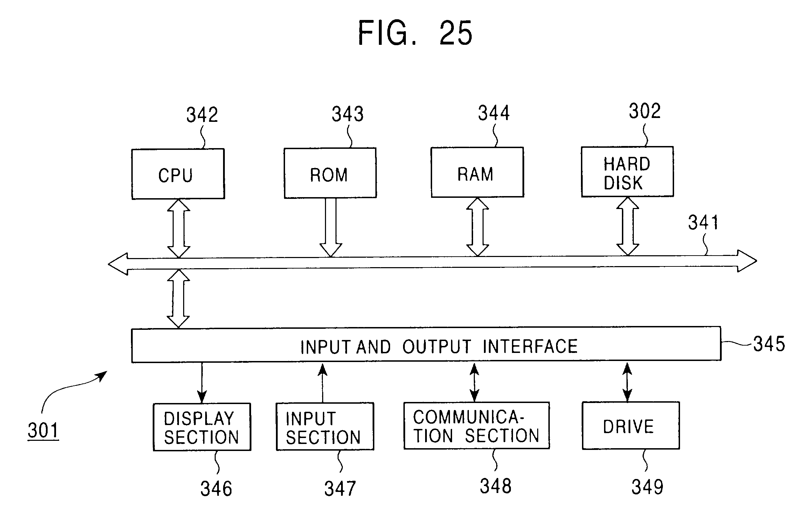

The personal computer 301 includes, for example, a central processing unit (CPU) 342, as shown in Fig. 25. The CPU 342 is connected to an input and output interface 345 through a bus 341. When the user operates an input section 347 formed of a keyboard and a mouse to input a command through the input and output interface 345, the CPU 342 executes a program stored in a read-only memory (ROM) 343, which corresponds to the semiconductor memory 303 shown in Fig. 24A. Alternatively, the CPU 342 loads into a random access memory (RAM) 344 a program stored in the hard disk 302 in advance; a program transferred through the satellite 322 or the network 331, received by a communication section 348, and installed into the hard disk 302; or a program read from the floppy disk 311, the CD-ROM 312, the MO disk 313, the DVD 314, or the magnetic disk 315 which is loaded into a drive 349, and installed into the hard disk 302; and executes it. The CPU 342 outputs the processing result, for example, through the input and output interface 345 to a display section 346 formed of a liquid-crystal display (LCD), as required.

In the present specification, the steps describing the program provided by a medium include processing executed in a time-sequential manner in the described order and also include processing not necessarily executed in a time-sequential manner but executed in parallel or separately.

In the present specification, a "system" refers to a whole apparatus formed of a plurality of apparatuses.

## Claims

1. A communication apparatus comprising:
link-address generation means for generating a second link address in a second link-address method correspondingly to a first link address in a first link-address method;
link-address storage means for storing the second link address correspondingly to the first link address; and
packet generation means for generating a predetermined-method packet which stores the second link address.

2. A communication apparatus according to Claim 1, wherein the first link address is a MAC address, and the second link address is an IEEE-1394 offset.

3. A communication apparatus according to Claim 1, wherein the first link address includes a node ID and an offset of IEEE 1394, and the second link address is a MAC address.

4. A communication apparatus according to claim 1, wherein said link-address generation means generates the second link address according to an ARP packet.

5. A communication method comprising:
a link-address generation step of generating a second link address in a second link-address method correspondingly to a first link address in a first link-address method;
a link-address storage step of storing the second link address correspondingly to the first link address; and
a packet generation step of generating a predetermined-method packet which stores the second link address.

6. A medium for making a computer execute a program, the program comprising:
a link-address generation step of generating a second link address in a second link-address method correspondingly to a first link address in a first link-address method;
a link-address storage step of storing the second link address correspondingly to the first link address; and
a packet generation step of generating a predetermined-method packet which stores the second link address.

7. A computer program comprising:
a link-address generation step of generating a second link address in a second link-address method correspondingly to a first link address in a first link-address method;
a link-address storage step of storing the second link address correspondingly to the first link address; and
a packet generation step of generating a predetermined-method packet which stores the second link address.
